# EUROPEAN PATENT SPECIFICATION

(11) **EP 3 590 804 B1**
(45) Date of publication and mention of the grant of the patent: **13.01.2021**
(21) Application number: 19183576.8
(22) Date of filing: 01.07.2019
(51) Int. Cl.: B62J 25/08, B62J 6/04, B62J 1/12

(54) **STRADDLED VEHICLE**
GRÄTSCHSITZFAHRZEUG
VÉHICULE À ENFOURCHER

(30) Priority: 02.07.2018 JP 2018126063
(43) Date of publication of application: 08.01.2020
(73) Proprietor: YAMAHA HATSUDOKI KABUSHIKI KAISHA, Iwata-shi, Shizuoka 438-8501 (JP)
(72) Inventor: TSUJIMURA, Yukito, Iwata-shi,, Shizuoka 438-8501 (JP)
(74) Representative: Grünecker Patent- und Rechtsanwälte PartG mbB

(56) References cited:
- EP-A2- 3 348 463
- JP-B2- 4 559 197

## Description

The present invention relates to a straddled vehicle according to the preamble of independent claim 1 that is ridden by a rider and a tandem rider one behind another.

Conventional straddled vehicles have been known in the art that are configured so that a rider and a tandem rider sit one behind another. For example, Japanese Patent No. 4559197 B2 discloses straddled vehicle according to the preamble of independent claim 1, in particular a motorcycle in which a main seat on which a rider sits and a tandem seat on which a tandem rider sits are formed integral with each other.

The motorcycle disclosed in Japanese Patent No. 4559197 B2 includes a pair of, right and left, rear frames (hereinafter referred to as seat frames) that support a seat and extend rearward, and a taillight placed rearward of the seat frames. The motorcycle includes a grab bar that the tandem rider sitting on the tandem seat grabs to maintain the body position. A bracket (hereinafter referred to as a cross member) is provided so as to bridge between the rear end portions of the seat frames. The grab bar is fixed to the cross member by a bolt. The grab bar is supported by the seat frame with the cross member therebetween.

The grab bar includes a portion (hereinafter referred to as a fixed portion) with a hole into which the bolt is inserted, and a portion (hereinafter referred to as a grab portion) that is grabbed by the tandem rider. The fixed portion is placed directly above the cross member and overlaps with the cross member. The grab portion extends rearward from the fixed portion. The grab bar includes a seat receiving portion that receives the load of the tandem seat. The seat receiving portion is placed directly above the cross member and overlaps with the cross member. The body weight of the tandem rider is supported by the seat frame with the tandem seat, the seat receiving portion of the grab bar, and the cross member therebetween.

If the length of the tandem seat in the front-rear direction can be elongated, it will increase the area of the tandem seat and it is possible to improve the comfortableness for the tandem rider. In view of this, one may consider extending the tandem seat rearward in order to improve the comfortableness for the tandem rider. However, the tandem seat is supported by the seat receiving portion of the grab bar. A portion (hereinafter referred to as a rear end portion) of the tandem seat that is rearward of the seat receiving portion of the grab bar is cantilevered on the seat receiving portion. Therefore, if the tandem seat is extended rearward, the rear end portion of the tandem seat is likely to be bent downward. When the tandem rider sits on the rear end portion of the tandem seat, the rear end portion of the tandem seat may possibly be bent downward to interfere with the taillight.

One may consider extending the seat frame, together with the tandem seat, rearward, and placing the cross member further on the rear side, in order to prevent the rear end portion of the tandem seat from being bent. However, the taillight is placed rearward of the seat frame. Therefore, the position of the cross member cannot be changed rearward without changing the position of the taillight. On the other hand, if one places the taillight further on the rear side, the total length of the vehicle in the front-rear direction will increase. This will lead to an increase in the size of the vehicle.

It is an object of the present invention to provide a straddled vehicle that is ridden by a rider and a tandem rider one behind another, wherein it is possible to improve the comfortableness for the tandem rider while suppressing an increase in the size of the vehicle. According to the present invention said object is solved by a straddled vehicle having the features of independent claim 1. Preferred embodiments are laid down in the dependent claims.

A straddled vehicle disclosed herein includes: a head pipe; a left seat frame that is placed rearward and leftward of the head pipe and extends rearward; a right seat frame that is placed rearward and rightward of the head pipe and extends rearward; and a cross member that is connected to the left seat frame and the right seat frame and extends in a left-right direction. The straddled vehicle includes a taillight having a front end and a rear end that is located rearward of the left seat frame and the right seat frame. The straddled vehicle includes: a main seat on which a rider sits that is placed rearward of the head pipe; a tandem seat on which a tandem rider sits that is placed rearward of the main seat and at least a portion of which is placed upward of the left seat frame, the right seat frame and the cross member; and a grab bar supported by the cross member, wherein. The tandem seat has a rear end that is located rearward of the front end of the taillight. The grab bar includes a fixed portion, a grab portion, a front support portion and a rear support portion. The fixed portion is fixed to the cross member and is placed so as to overlap with the cross member as the vehicle is seen from above. The grab portion includes a left grab portion that extends rearward from the fixed portion and is placed leftward of a vehicle center line and a right grab portion that extends rearward from the fixed portion and is placed rightward of the vehicle center line. The front support portion is placed so as to overlap with the cross member as the vehicle is seen from above and supports the tandem seat. At least a portion of the rear support portion is placed rearward of the cross member, the left seat frame and the right seat frame and the rear support portion supports the tandem seat.

With the straddled vehicle described above, the grab bar includes the rear support portion at least a portion of which is placed rearward of the cross member, the left seat frame and the right seat frame, in addition to the front support portion placed directly above the cross member. The tandem seat is supported not only by the front support portion but also by the rear support portion located rearward of the front support portion. Therefore, the rear end portion of the tandem seat is unlikely to be bent downward. Therefore, it is possible to prevent the rear end portion of the tandem seat from being bent downward to interfere with the taillight even when the tandem rider sits on the rear end portion of the tandem seat. Herein, the rear support portion is a portion of the grab bar supported by the cross member. Therefore, there is no need to change the position of the taillight further on the rear side in order to place the cross member further on the rear side. Therefore, it is possible to suppress an increase in the size of the vehicle. Thus, with the straddled vehicle described above, it is possible to improve the comfortableness of the tandem seat while suppressing an increase in the size of the vehicle.

According to a preferred embodiment, the rear support portion extends rearward from the fixed portion.

According to the embodiment described above, the grab portion and the rear support portion each extend rearward from the fixed portion. As compared with a case where the rear support portion extends from the grab portion, it is possible to reduce the load on the grab portion. In other words, as compared with a case where the rear support portion is supported by the fixed portion with the grab portion therebetween, it is possible to reduce the load on the grab portion. Therefore, there is no need to increase the rigidity of the grab portion in comparison with those of conventional techniques, and it is possible to prevent an increase in the size and weight of the grab portion.

According to a preferred embodiment, the fixed portion includes a left fixed portion that is placed leftward of the vehicle center line and a right fixed portion that is placed rightward of the vehicle center line.

According to the embodiment described above, the cross member can be made to support the grab bar in a well-balanced manner in the left-right direction. Thus, the tandem seat can be supported in a well-balanced manner by the front support portion and the rear support portion of the grab bar.

According to a preferred embodiment, the rear support portion includes a left arm extending rearward from the left fixed portion, a right arm extending rearward from right fixed portion and spaced apart rightward from the left arm, and a central arm provided so as to bridge between the left arm and the right arm.

According to the embodiment described above, the left arm and the right arm are spaced apart from each other in the left-right direction, and one can put a hand into between the left arm and the right arm. Thus, it is possible to easily maintain vehicle components that are placed downward of the rear support portion.

According to a preferred embodiment, the central arm of the rear support portion is spaced apart forward from a portion of the grab portion.

According to the embodiment described above, one can easily maintain vehicle components that are placed downward of the rear support portion by putting a hand into the gap between the central arm of the rear support portion and the portion of the grab portion.

According to a preferred embodiment, the left arm of the rear support portion is spaced apart rightward from the left grab portion of the grab portion; and the right arm of the rear support portion is spaced apart leftward from the right grab portion of the grab portion.

According to the embodiment described above, one can easily maintain vehicle components that are placed downward of the rear support portion by putting a hand into the gap between the left arm of the rear support portion and the left grab portion or into the gap between the right arm of the rear support portion and the right grab portion.

According to a preferred embodiment, the grab bar includes a taillight attachment portion to which the taillight is attached.

According to the embodiment described above, the taillight can be attached to the grab bar, and the taillight can be supported by the grab bar. There is no need to extend the left seat frame and the right seat frame rearward in order to ensure an area to which the taillight is attached. Therefore, it is possible to suppress an increase in the size of the vehicle.

According to a preferred embodiment, the left arm and the right arm each include a taillight attachment portion to which the taillight is attached.

According to the embodiment described above, the taillight can be attached to the grab bar, and the taillight can be supported by the grab bar. There is no need to extend the left seat frame and the right seat frame rearward in order to ensure an area to which the taillight is attached. Therefore, it is possible to suppress an increase in the size of the vehicle.

According to a preferred embodiment, the front support portion includes a left seat receiving portion that is placed leftward of the vehicle center line as the vehicle is seen from above and receives a load from the tandem seat, and a right seat receiving portion that is placed rightward of the vehicle center line as the vehicle is seen from above and receives a load from the tandem seat. The rear support portion includes a central seat receiving portion that is placed on the vehicle center line as the vehicle is seen from above and receives a load from the tandem seat.

According to the embodiment described above, the tandem seat can be stably supported in a well-balanced manner.

According to a preferred embodiment, the straddled vehicle includes a storage box formed from a resin material, the storage box including a box-shaped storage section that is placed forward of the cross member and a plate portion extending rearward from the storage section. The plate portion of the storage box includes a sandwiched portion that is sandwiched between the tandem seat and the rear support portion of the grab bar.

According to the embodiment described above, the plate portion of the storage box, which is formed from a resin material, is interposed between the tandem seat and the rear support portion of the grab bar, thereby reducing the wear deterioration of the rear support portion of the grab bar.

According to a preferred embodiment, an upper edge of the left grab portion and the right grab portion is inclined relative to an upper edge of the rear support portion so as to extend upward toward the rear side as the vehicle is seen from the side.

According to the embodiment described above, the tandem seat can be stably supported by the rear support portion of the grab bar, and the tandem rider can easily grab the grab portion and can easily hold his/her body position.

According to a preferred embodiment, the fixed portion, the grab portion, the front support portion and the rear support portion of the grab bar are formed from a single member formed integrally together.

According to the embodiment described above, the rigidity of the grab bar can be increased as compared with a case where the fixed portion, the grab portion, the front support portion and the rear support portion of the grab bar are a plurality of members assembled together. Therefore, the tandem seat can be stably supported.

According to the teachings set forth above, it is possible to provide a straddled vehicle that is ridden by a rider and a tandem rider one behind another, wherein it is possible to improve the comfortableness for the tandem rider while suppressing an increase in the size of the vehicle.

### BRIEF DESCRIPTION OF THE DRAWINGS

FIG. 1 is a left side view of a scooter according to an embodiment.
FIG. 2 is a plan view of the scooter.
FIG. 3 is a left side view of a vehicle frame, a storage box and a grab bar.
FIG. 4 is a plan view of the vehicle frame.
FIG. 5 is a plan view of the vehicle frame and the grab bar.
FIG. 6 is a plan view of the vehicle frame, the storage box and the grab bar.
FIG. 7 is a perspective view of the vehicle frame.
FIG. 8 is a perspective view of the storage box.
FIG. 9 is a left side view of a portion of the scooter when the seat is pivoted upward.
FIG. 10 is a cross-sectional view, taken along line X-X of FIG. 2, of a portion of the scooter along the vehicle center line.
FIG. 11 is a perspective view of the grab bar.
FIG. 12 is a plan view of the grab bar.
FIG. 13 is a left side view of the grab bar.
FIG. 14 is a front view of the grab bar.

### DETAILED DESCRIPTION OF THE PREFERRED EMBODIMENTS

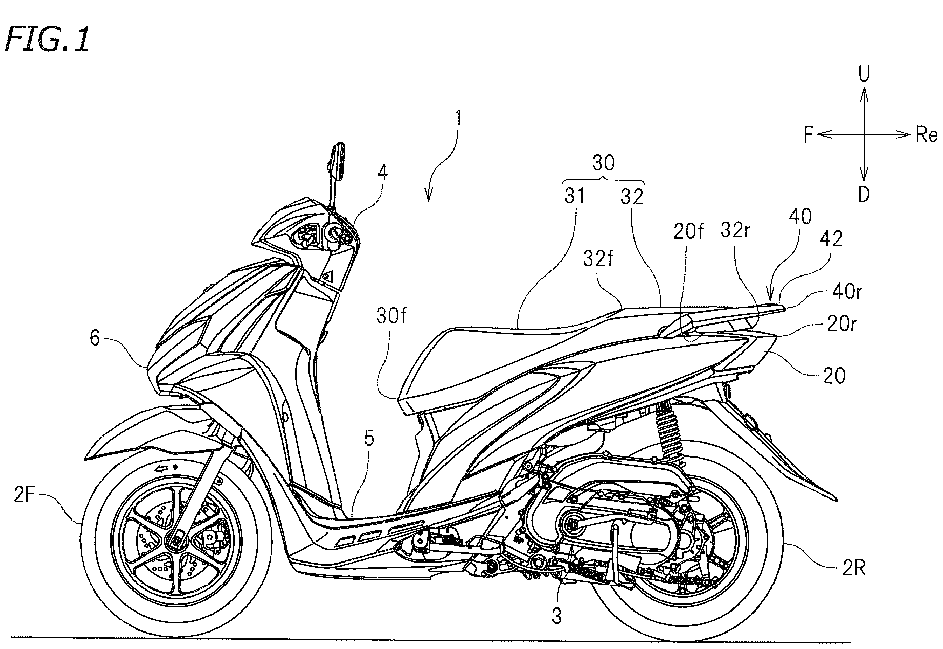

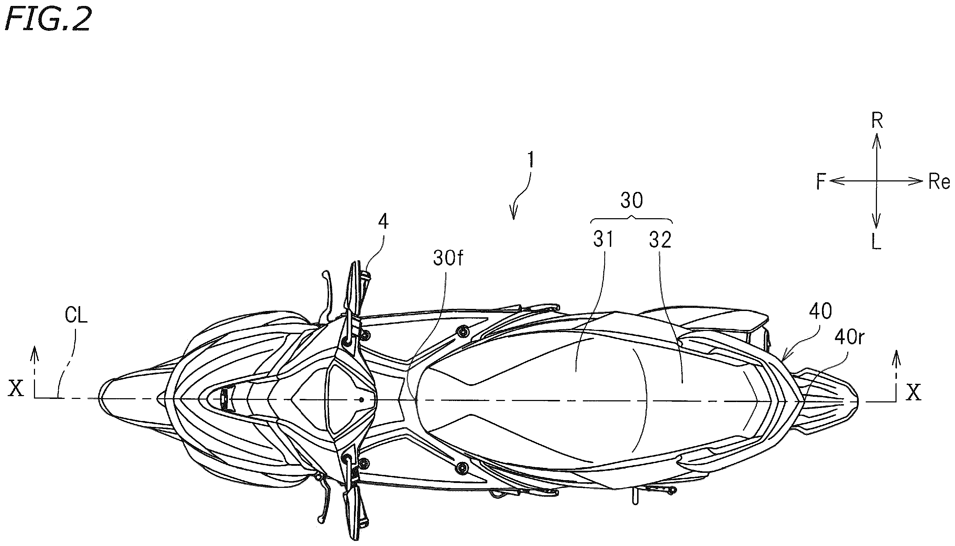

An embodiment will now be described with reference to the drawings. As shown in FIG. 1, a straddled vehicle of the present embodiment is a scooter 1. FIG. 1 is a left side view of the scooter 1. FIG. 2 is a plan view of the scooter 1.

The terms front, rear, left, right, up and down, as used in the description below, refer to these directions as seen from a virtual rider seated on a main seat 31 while the scooter 1 is standing upright on a horizontal surface with no rider, no tandem rider and no load thereon, unless specified otherwise. The designations F, Re, L, R, U and D, as used in the figures, refer to front, rear, left, right, up and down, respectively.

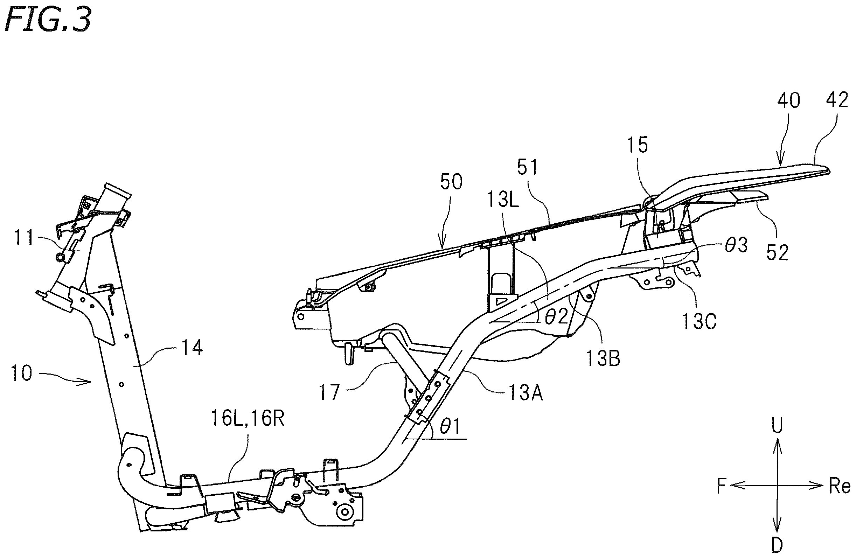

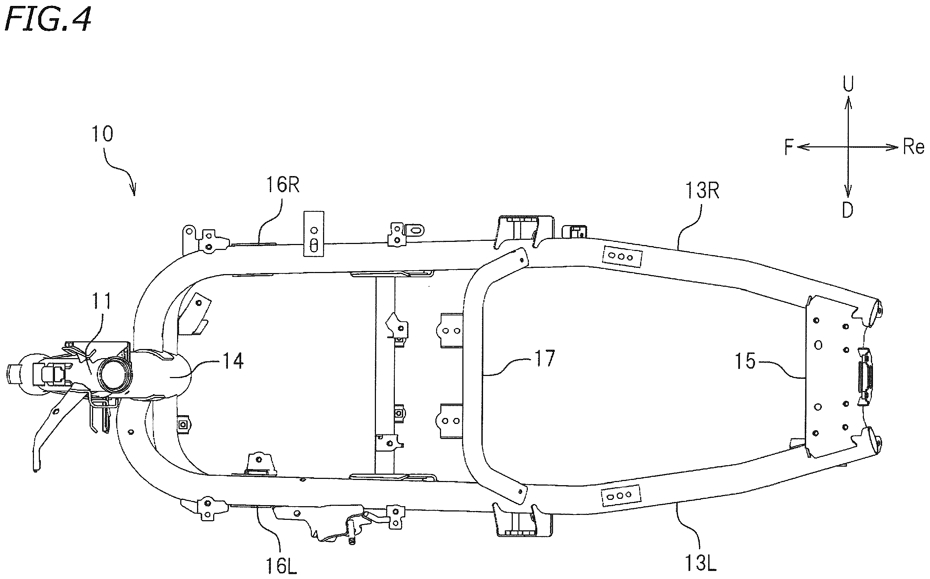

The scooter 1 includes a vehicle frame 10 (see FIG. 3 and FIG. 4), a front wheel 2F, a rear wheel 2R, an engine unit 3, a steering handle 4, a foot board 5, a seat 30, a storage box 50 (see FIG. 3), a headlight 6, a taillight 20, and a grab bar 40.

As shown in FIG. 3 and FIG. 4, the vehicle frame 10 includes a head pipe 11, a down frame 14 extending downward from the head pipe 11, a left under frame 16L and a right under frame 16R extending rearward from the down frame 14, a left seat frame 13L extending rearward from the left under frame 16L, and a right seat frame 13R extending rearward from the right under frame 16R. The vehicle frame 10 includes a cross member 17 and a cross member 15.

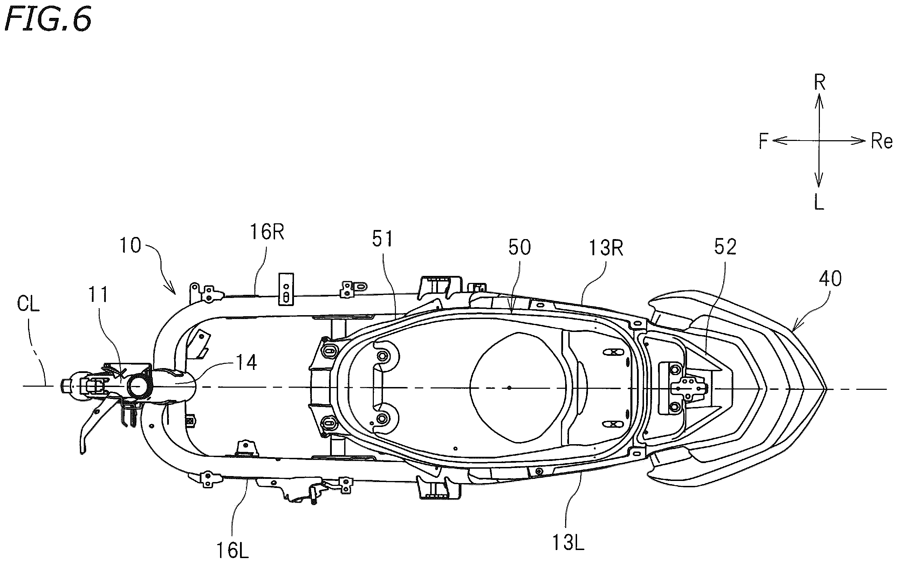

In the present specification, for the direction in which members such as frames extend, the term "front/forward" refers not only to the direction that extends in the front direction along the vehicle center line CL (see FIG. 6), as the vehicle is seen from above, but also to directions that are inclined left/right from that direction by an angle that is less than or equal to 45 degrees, unless specified otherwise. Similarly, the term "rear/rearward" refers not only to the direction that extends rearward along the vehicle center line CL, as the vehicle is seen from above, but also to directions that are inclined left/right from that direction by an angle of 45 degrees of less. The term "left/leftward" refers not only to the direction that extends leftward perpendicular to the vehicle center line CL, as the vehicle is seen from above, but also to directions that are inclined frontward/rearward from that direction by an angle of 45 degrees of less. The term "right/rightward" refers not only to the direction that extends rightward perpendicular to the vehicle center line CL, as the vehicle is seen from above, but also to directions that are inclined frontward/rearward from that direction by an angle of 45 degrees of less. The term "up/upward" refers not only to the vertically upward direction, as the vehicle is seen from sideways, but also to directions that are inclined frontward/rearward from that direction by an angle of 45 degrees of less. The term "down/downward" refers not only to the vertically downward direction, as the vehicle is seen from sideways, but also to directions that are inclined frontward/rearward from that direction by an angle of 45 degrees of less.

The left seat frame 13L is placed rearward and leftward of the head pipe 11 and extends rearward. The right seat frame 13R is placed rearward and rightward of the head pipe 11 and extends rearward. The left seat frame 13L is placed leftward of the vehicle center line CL, and the right seat frame 13R is placed rightward of the vehicle center line CL.

As shown in FIG. 3, the left seat frame 13L includes a first portion 13A extending rearward and upward from the left under frame 16L, a second portion 13B extending rearward and upward from the first portion 13A, and a third portion 13C extending rearward and upward from the second portion 13B, as the vehicle is seen from the side. Similarly, the right seat frame 13R includes the first portion 13A extending rearward and upward from the right under frame 16R, the second portion 13B extending rearward and upward from the first portion 13A, and the third portion 13C extending rearward and upward from the second portion 13B, as the vehicle is seen from the side. θ1> θ2> θ3 holds where θ1 is the angle formed between the first portion 13A and the horizontal line, θ2 is the angle formed between the second portion 13B and the horizontal line, and θ3 is the angle formed between the third portion 13C and horizontal line, as the vehicle is seen from above. The inclination angle of the left seat frame 13L and the right seat frame 13R relative to the horizontal line decreases toward the rear side.

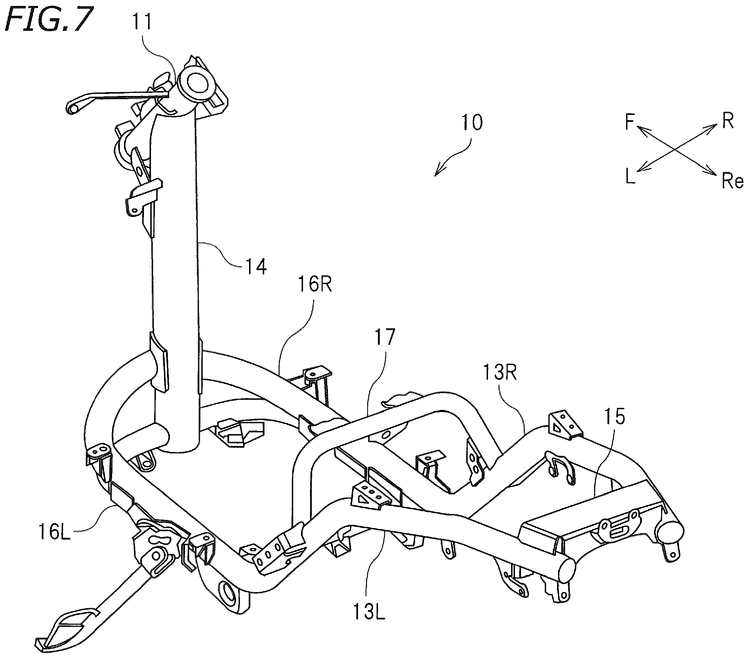

As shown in FIG. 4 and FIG. 7, the cross member 17 is connected to the first portion 13A of the left seat frame 13L and the first portion 13A of the right seat frame 13R. The cross member 17 is provided so as to bridge between the first portion 13A of the left seat frame 13L and the first portion 13A of the right seat frame 13R.

The cross member 15 is connected to the third portion 13C of the left seat frame 13L and the third portion 13C of the right seat frame 13R. The cross member 15 is provided so as to bridge between the third portion 13C of the left seat frame 13L and the third portion 13C of the right seat frame 13R. The cross member 15 extends in the left-right direction.

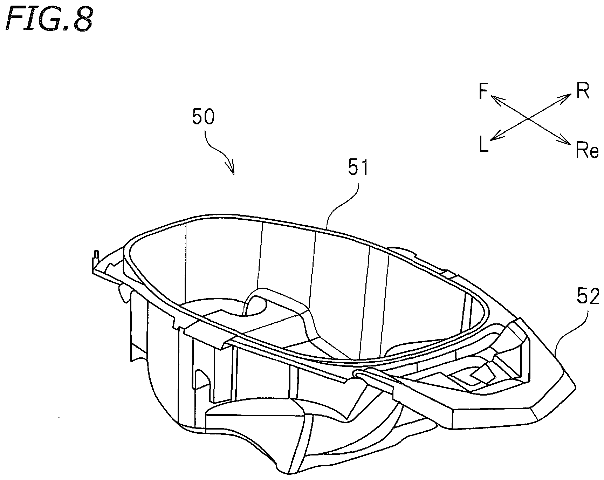

As shown in FIG. 3 and FIG. 6, the storage box 50 is supported by the cross member 17 and the cross member 15. The storage box 50 is indirectly supported by the left seat frame 13L and the right seat frame 13R with the cross member 17 and the cross member 15 therebetween. The storage box 50 includes a box-shaped storage section 51 placed forward of the cross member 15, and a plate portion 52 extending rearward from the storage section 51 (see FIG. 8). As shown in FIG. 3 and FIG. 6, a portion of the storage section 51 is located directly above the cross member 17. A portion of the plate portion 52 is located directly above the cross member 15. As shown in FIG. 6, as the vehicle is seen from above, a portion of the storage section 51 and the cross member 17 overlap with each other, and a portion of the plate portion 52 and the cross member 15 overlap with each other. As shown in FIG. 3, as the vehicle is seen from the side, a portion of the storage section 51 overlaps with the left seat frame 13L and the right seat frame 13R. The storage box 50 is formed from a resin material. The storage section 51 and the plate portion 52 are formed integral with each other. The storage section 51 and the plate portion 52 are formed from a resin-made single member.

As shown in FIG. 1, the seat 30 includes a main seat 31 placed rearward of the head pipe 11, and a tandem seat 32 placed rearward of the main seat 31. The main seat 31 is a portion on which the rider sits. The tandem seat 32 is a portion on which the tandem rider sits. At least a portion of the tandem seat 32 is placed upward of the left seat frame 13L, the right seat frame 13R and the cross member 15. In the present embodiment, the main seat 31 and the tandem seat 32 are formed integral with each other. The main seat 31 and the tandem seat 32 are formed from a single member.

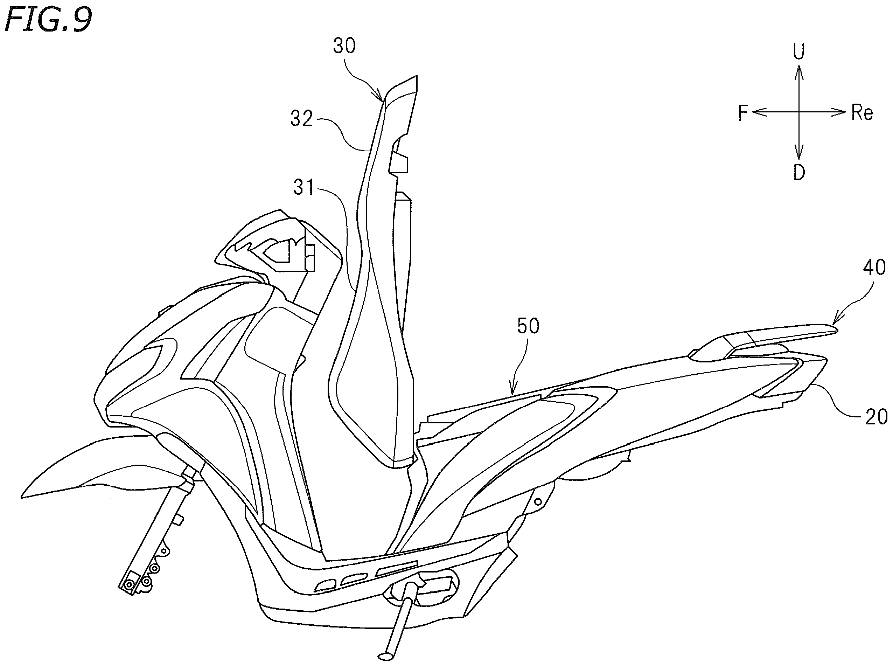

The seat 30 is placed upward of the storage box 50. As shown in FIG. 9, the front end portion of the seat 30 is linked to the front end portion of the storage box 50 so that it can pivot up and down. When the rear end portion of the seat 30 is pivoted upward, the storage section 51 of the storage box 50 is opened. Thus, items can be put in and out of the storage section 51. When the rear end portion of the seat 30 is pivoted downward, the seat 30 is located upward of the storage box 50. Thus, the storage section 51 of the storage box 50 is closed by the seat 30. This also allows for the rider to sit on the main seat 31 and the tandem rider to sit on the tandem seat 32.

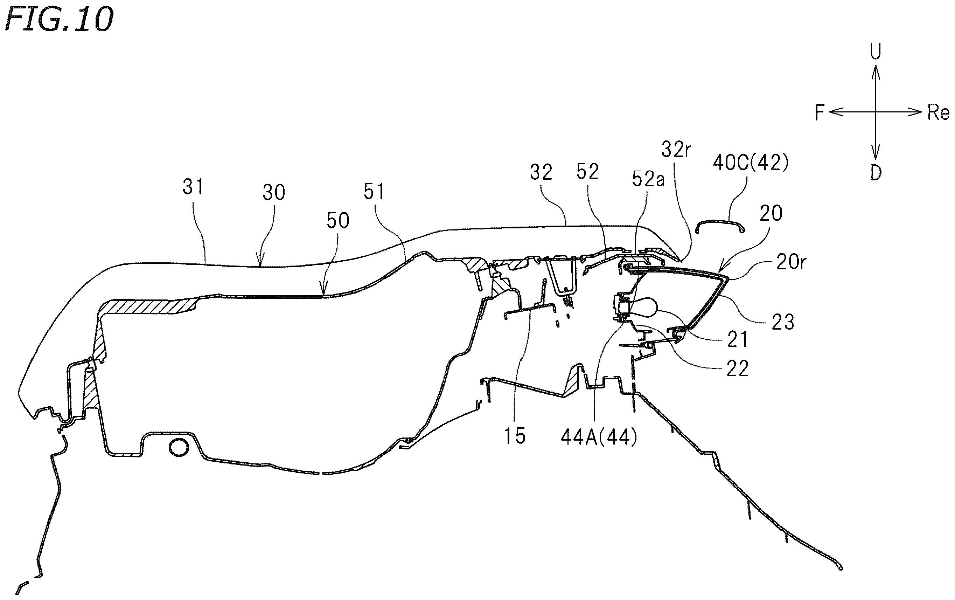

As shown in FIG. 1, the taillight 20 is placed downward of a portion of the tandem seat 32. A front end 20f of the taillight 20 is located rearward of the front end 30f of the seat 30. The front end 20f of the taillight 20 is located rearward of a front end 32f of the tandem seat 32. A rear end 32r of the tandem seat 32 is located rearward of the front end 20f of the taillight 20. As shown in FIG. 10, the taillight 20 includes a light source 21, a reflector 22, and a cover 23 that allows light from the light source 21 to pass therethrough. In the present embodiment, the light source 21 is a bulb. However, the light source 21 is not limited to a bulb. For example, the light source 21 may be an LED.

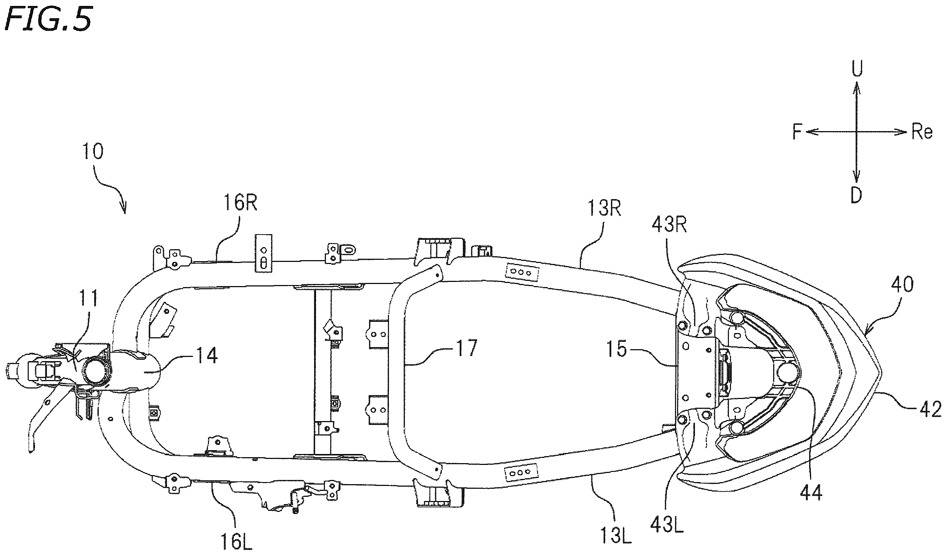

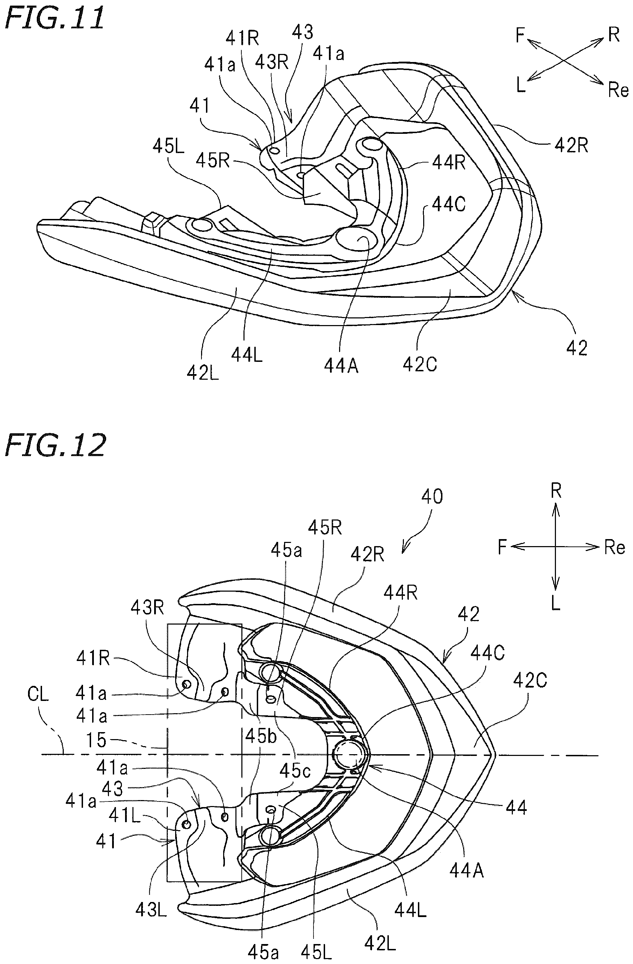

The grab bar 40 is a member that is grabbed by the tandem rider sitting on the tandem seat 32. The tandem rider can easily hold his/her body position by grabbing the grab bar 40. As shown in FIG. 5, the grab bar 40 is attached to the vehicle frame 10. FIG. 11, FIG. 12, FIG. 13 and FIG. 14 are a perspective view, a plan view, a left side view and a front view, respectively, of the grab bar 40. As shown in FIG. 12, the grab bar 40 includes a fixed portion 41 that is fixed to the cross member 15, a grab portion 42 that is grabbed by the tandem rider, and a front support portion 43 and a rear support portion 44 that support the tandem seat 32.

The fixed portion 41 is placed so as to overlap with the cross member 15 as the vehicle is seen from above. In other words, the fixed portion 41 is placed directly above the cross member 15. The fixed portion 41 is fixed to the cross member 15. The fixed portion 41 has a hole 41a through which a bolt is inserted. The fixed portion 41 is attached to the cross member 15 by the bolt. The fixed portion 41 includes a left fixed portion 41L that is placed leftward of the vehicle center line CL, and a right fixed portion 41R that is placed rightward of the vehicle center line CL. The left fixed portion 41L and the right fixed portion 41R are each attached to the cross member 15 by a bolt. The left fixed portion 41L and the right fixed portion 41R are spaced apart from each other. A gap is provided between the left fixed portion 41L and the right fixed portion 41R. However, the left fixed portion 41L and the right fixed portion 41R may be continuous with each other. A gap may be absent between the left fixed portion 41L and the right fixed portion 41R.

The grab portion 42 includes a left bar 42L extending rearward from the left fixed portion 41L, a right bar 42R extending rearward from the right fixed portion 41R, and a central bar 42C provided so as to bridge between the left bar 42L and the right bar 42R. The central bar 42C extends in the left-right direction. As shown in FIG. 1, a rear end 40r of the grab portion 42 is located rearward of a rear end 20r of the taillight 20. Note however that there is no particular limitation on the position of the rear end 40r of the grab portion 42.

The grab bar 40 serves to hold the body position of the tandem rider by being grabbed by the tandem rider, and serves also to support the load of the tandem seat 32. The grab bar 40 according to the present embodiment includes the front support portion 43 and the rear support portion 44 that support the tandem seat 32.

As shown in FIG. 12, the front support portion 43 is placed so as to overlap with the cross member 15 as the vehicle is seen from above. In other words, the front support portion 43 is placed directly above the cross member 15. The front support portion 43 includes a left seat receiving portion 43L that is placed leftward of the vehicle center line CL, and a right seat receiving portion 43R that is placed rightward of the vehicle center line CL. Note that the "seat receiving portion" is a portion that receives the downward load from the tandem seat 32. While the left seat receiving portion 43L and the right seat receiving portion 43R may be continuous with each other, the left seat receiving portion 43L and the right seat receiving portion 43R are spaced apart from each other in the present embodiment. A gap is provided between the left seat receiving portion 43L and the right seat receiving portion 43R.

The rear support portion 44 is placed rearward of the cross member 15. At least a portion of the rear support portion 44 is placed rearward of the left seat frame 13L and the right seat frame 13R. The rear support portion 44 extends rearward from the fixed portion 41. The rear support portion 44 is U-shaped. The rear support portion 44 includes a left arm 44L extending rearward from the left fixed portion 41L, a right arm 44R extending rearward from the right fixed portion 41R, and a central arm 44C provided so as to bridge between the left arm 44L and the right arm 44R. The left arm 44L is placed leftward of the vehicle center line CL, and the right arm 44R is placed rightward of the vehicle center line CL. The right arm 44R is spaced apart rightward from the left arm 44L. A gap is provided between the left arm 44L and the right arm 44R. The central arm 44C extends in the left-right direction. As the vehicle is seen from above, the central arm 44C crosses the vehicle center line CL. The rear support portion 44 includes a central seat receiving portion 44A. The central seat receiving portion 44A is a portion that receives the downward load from the tandem seat 32. The central seat receiving portion 44A is placed on the vehicle center line CL as the vehicle is seen from above.

The central arm 44C of the rear support portion 44 is spaced apart forward from the central bar 42C of the grab portion 42. The left arm 44L of the rear support portion 44 is spaced apart rightward from the left bar 42L of the grab portion 42. The right arm 44R of the rear support portion 44 is spaced apart leftward from the right bar 42R of the grab portion 42. A gap is provided between the central arm 44C and the central bar 42C, between the left arm 44L and the left bar 42L, and between the right arm 44R and the right bar 42R.

The grab bar 40 includes left and right taillight attachment portions 45L and 45R to which the taillight 20 is attached. The left arm 44L of the rear support portion 44 includes a left taillight attachment portion 45L placed leftward of the vehicle center line CL. The right arm 44R of the rear support portion 44 includes a right taillight attachment portion 45R placed rightward of the vehicle center line CL. The left taillight attachment portion 45L includes a vertical wall 45b extending upward from the left fixed portion 41L, and a horizontal wall 45c extending rearward from the vertical wall 45b. The right taillight attachment portion 45R includes a vertical wall 45b extending upward from the right fixed portion 41R, and a horizontal wall 45c extending rearward from the vertical wall 45b. The horizontal walls 45c of the left taillight attachment portion 45L and the right taillight attachment portion 45R each have a hole 45a through which a bolt is inserted. The taillight 20 is attached to the left taillight attachment portion 45L and the right taillight attachment portion 45R by the bolt.

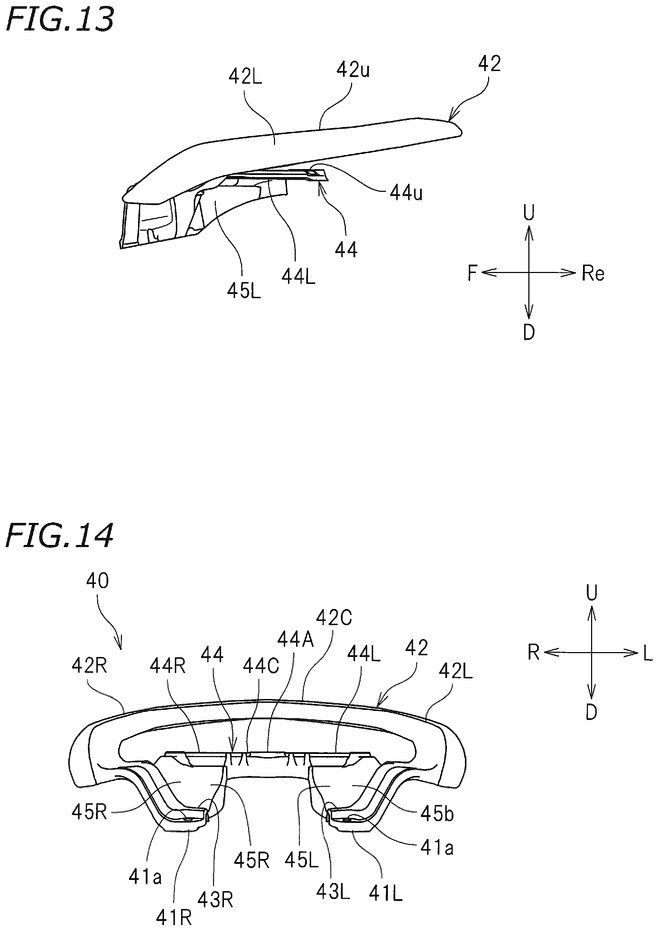

As shown in FIG. 13, as the vehicle is seen from the side, an upper edge 44u of the left arm 44L of the rear support portion 44 and an upper edge 44u of the right arm 44R thereof extend horizontally. On the other hand, as the vehicle is seen from the side, an upper edge 42u of the left bar 42L and the right bar 42R of the grab portion 42 is inclined from the horizontal line. An upper edge 42u of the left bar 42L and the right bar 42R is inclined from the horizontal line so that it extends upward toward the rear side. The upper edge 42u is inclined relative to the upper edge 44u so that it extends upward toward the rear side.

While the left seat receiving portion 43L, the right seat receiving portion 43R and the central seat receiving portion 44A of the grab bar 40 may be in direct contact with the tandem seat 32, they are in indirect contact with each other with the plate portion 52 of the storage box 50 therebetween in the present embodiment. As shown in FIG. 10, a portion (hereinafter referred to as a sandwiched portion) 52a of the plate portion 52 of the storage box 50 is interposed between the tandem seat 32 and the central seat receiving portion 44A of the grab bar 40. Similarly, a portion of the plate portion 52 of the storage box 50 is interposed between the tandem seat 32 and the left seat receiving portion 43L of the grab bar 40, and between the tandem seat 32 and the right seat receiving portion 43R of the grab bar 40.

As described above, with the scooter 1 according to the present embodiment, the grab bar 40 includes the rear support portion 44 at least a portion of which is placed rearward of the cross member 15, the left seat frame 13L and the right seat frame 13R, in addition to the front support portion 43 placed directly above the cross member 15. The tandem seat 32 is supported not only by the front support portion 43 but also by the rear support portion 44 located rearward of the front support portion 43 (see FIG. 10). Therefore, a rear end portion (i.e., a portion that is rearward of the cross member 15) of the tandem seat 32 is unlikely to be bent downward. Therefore, it is possible to prevent the rear end portion of the tandem seat 32 from being bent downward to interfere with the taillight 20 even when the tandem rider sits on the rear end portion of the tandem seat 32. Herein, the rear support portion 44 is a portion of the grab bar 40 supported by the cross member 15. Therefore, with the scooter 1 according to the present embodiment, there is no need to extend the left seat frame 13L and the right seat frame 13R rearward in order to place the cross member 15 further on the rear side. Therefore, even if the tandem seat 32 is extended rearward, it is possible to suppress an increase in the size of the vehicle. Therefore, with the scooter 1 according to the present embodiment, it is possible to improve the comfortableness of the tandem seat 32 while suppressing an increase in the size of the vehicle.

Note that the configuration of the grab bar 40 (see FIG. 12) of the present embodiment is illustrative. There is no particular limitation on the configuration of the grab bar 40. As another configuration example of the grab bar 40, the rear support portion 44 may be connected to the grab portion 42. The rear support portion 44 may be supported by the fixed portion 41 with the grab portion 42 therebetween. However, in the present embodiment, the rear support portion 44 extends rearward from the fixed portion 41. The grab portion 42 and the rear support portion 44 each extend rearward from the fixed portion 41. Therefore, the load transmitted from the tandem seat 32 to the rear support portion 44 is transmitted to the fixed portion 41 without passing through the grab portion 42. Therefore, it is possible to reduce the load transmitted to the grab portion 42. According to the present embodiment, there is no need to increase the rigidity of the grab portion 42 in comparison with those of conventional techniques. Thus, it is possible to prevent an increase in the size and weight of the grab portion 42, and hence to suppress an increase in the size and weight of the grab bar 40.

In the present embodiment, the fixed portion 41 of the grab bar 40 includes the left fixed portion 41L placed leftward of the vehicle center line CL, and the right fixed portion 41 R placed rightward of the vehicle center line CL. Therefore, the cross member 15 can be made to support the grab bar 40 in a well-balanced manner in the left-right direction. Thus, the tandem seat 32 can be supported in a well-balanced manner by the front support portion 43 and the rear support portion 44 of the grab bar 40.

According to the present embodiment, the rear support portion 44 includes the left arm 44L, the right arm 44R and the central arm 44C. A gap is provided between the cross member 15 and the central arm 44C. The right arm 44R is spaced apart rightward from the left arm 44L, and a gap is provided between the left arm 44L and the right arm 44R. Therefore, one can put a hand into between the left arm 44L and the right arm 44R. Thus, it is possible to easily maintain the taillight 20 placed downward of the rear support portion 44.

According to the present embodiment, the central arm 44C of the rear support portion 44 is spaced apart forward from the central bar 42C of the grab portion 42, and a gap is provided between the central arm 44C and the central bar 42C. The left arm 44L of the rear support portion 44 is spaced apart rightward from the left bar 42L of the grab portion 42, and a gap is provided between the left arm 44L the left bar 42L. The right arm 44R of the rear support portion 44 is spaced apart leftward from the right bar 42R of the grab portion 42, and a gap is provided between the right arm 44R and the right bar 42R. Therefore, the operator can easily maintain the taillight 20 placed downward of the rear support portion 44 by putting a hand into the gap.

The grab bar 40 includes the taillight attachment portions 45L and 45R to which the taillight 20 is attached. The left arm 44L of the rear support portion 44 includes the left taillight attachment portion 45L, and the right arm 44R thereof includes the right taillight attachment portion 45R. Therefore, the taillight 20 can be attached to the grab bar 40. The taillight 20 can be supported by the grab bar 40. According to the present embodiment, there is no need to extend the left seat frame 13L and the right seat frame 13R rearward in order to ensure an area to which the taillight 20 is attached. Therefore, it is possible to suppress an increase in the size of the vehicle.

Note that with the front support portion 43 and the rear support portion 44 of the grab bar 40, there is no particular limitation on the arrangement of portions that receive the load from the tandem seat 32. However, according to the present embodiment, the front support portion 43 includes the left seat receiving portion 43L placed leftward of the vehicle center line CL as the vehicle is seen from above, and the right seat receiving portion 43R placed rightward of the vehicle center line CL as the vehicle is seen from above, and the rear support portion 44 includes the central seat receiving portion 44A placed on the vehicle center line CL as the vehicle is seen from above. Therefore, the grab bar 40 can receive the load from the tandem seat 32 in a well-balanced manner. Thus, the tandem seat 32 can be stably supported in a well-balanced manner.

While the tandem seat 32 may be directly supported by the front support portion 43 and the rear support portion 44 of the grab bar 40, it is supported indirectly with the plate portion 52 of the storage box 50 therebetween in the present embodiment. The sandwiched portion 52a of the storage box 50 formed from a resin material is sandwiched between the tandem seat 32 and the front support portion 43 and between the tandem seat 32 and the rear support portion 44. This reduces the wear deterioration of the front support portion 43 and the rear support portion 44 of the grab bar 40.

As shown in FIG. 13, the upper edge 44u of the rear support portion 44 of the grab bar 40 extend horizontally as the vehicle is seen from the side. Therefore, the tandem seat 32 can be supported more stably by the rear support portion 44. On the other hand, the left bar 42L and the right bar 42R of the grab portion 42 of the grab bar 40 are inclined so as to extend upward toward the rear side relative to the upper edge 44u of the rear support portion 44 as the vehicle is seen from the side. Therefore, the tandem rider sitting on the tandem seat 32 can easily grab the grab portion 42 and can easily hold his/her body position.

According to the present embodiment, the fixed portion 41, the grab portion 42, the front support portion 43 and the rear support portion 44 of the grab bar 40 are formed from a single member formed integrally together. Therefore, the rigidity of the grab bar 40 can be increased as compared with a case where the fixed portion 41, the grab portion 42, the front support portion 43 and the rear support portion 44 are formed from separate members and assembled together. Thus, the tandem seat 32 can be supported stably by the grab bar 40.

While one embodiment has been described above, the embodiment is merely an example, and various other embodiments are possible.

The straddled vehicle refers to a vehicle to be straddled by a passenger. The straddled vehicle is not limited to the scooter 1. The straddled vehicle may be a motorcycle other than a scooter. The straddled vehicle is not limited to a motorcycle. The number of wheels provided on the straddled vehicle is not limited to two.

In the embodiment described above, the main seat 31 and the tandem seat 32 are formed integral with each other. However, the main seat 31 and the tandem seat 32 may be formed separately from each other.

In the embodiment described above, the fixed portion 41 of the grab bar 40 is fixed to the cross member 15 by a bolt. However, there is no particular limitation on how the fixed portion 41 is fixed to the cross member 15. For example, the fixed portion 41 may be welded to the cross member 15.

In the embodiment described above, the rear support portion 44 is U-shaped. However, the shape of the rear support portion 44 is not limited to a U shape.

A gap may be absent in at least one of these locations: between the central arm 44C and the central bar 42C, between the left arm 44L and the left bar 42L, and between the right arm 44R and the right bar 42R. The central arm 44C and the central bar 42C may be directly connected to each other, the left arm 44L and the left bar 42L may be directly connected to each other, and the right arm 44R and the right bar 42R may be directly connected to each other.

While the grab bar 40 includes the taillight attachment portions 45L and 45R in the embodiment described above, the taillight attachment portions 45L and 45R may be absent. The grab bar 40 may be shaped so that the taillight 20 cannot be attached thereto.

In the embodiment described above, the rear support portion 44 includes the central seat receiving portion 44A placed on the vehicle center line CL as the vehicle is seen from above. The rear support portion 44 only includes the central seat receiving portion 44A as the seat receiving portion. However, the rear support portion 44 may include, in addition to the central seat receiving portion 44A, another seat receiving portion that is placed leftward and/or rightward of the vehicle center line CL as the vehicle is seen from above. The rear support portion 44 may include a seat receiving portion that is placed leftward and/or rightward of the vehicle center line CL as the vehicle is seen from above, and not include the central seat receiving portion 44A that is placed on the vehicle center line CL as the vehicle is seen from above.

While the upper edge 44u of the rear support portion 44 extends horizontally as the vehicle is seen from the side in the embodiment described above, the present invention is not limited to this. The upper edge 44u of the rear support portion 44 may be inclined from the horizontal line as the vehicle is seen from the side. The upper edge 42u of the grab portion 42 does not need to extend upward toward the rear side as the vehicle is seen from the side. The upper edge 42u of the grab portion 42 may extend horizontally as the vehicle is seen from the side. The upper edge 42u of the grab portion 42 may extend downward toward the rear side as the vehicle is seen from the side.

While the grab portion 42 includes the left bar 42L, the right bar 42R, and the central bar 42C provided so as to bridge between the left bar 42L and the right bar 42R in the embodiment described above, the central bar 42C may be optional. The left bar 42L and the right bar 42R may be separated from each other with a gap provided between the left bar 42L and the right bar 42R. Note however that even when the left bar 42L and the right bar 42R are separated from each other, the rear end of the left bar 42L or the rear end of the right bar 42R is located rearward of the rear end of the central arm 44C of the rear support portion 44.

In the embodiment described above, the grab bar 40 is formed from a single member. However, the grab bar 40 may be formed from two or more members assembled together.

### REFERENCE SIGNS LIST

1: Scooter (straddled vehicle), 11: Head pipe, 13L: Left seat frame, 13R: Right seat frame, 15: Cross member, 20: Taillight, 20f: Front end of taillight, 20r: Rear end of taillight, 31: Main seat, 32: Tandem seat, 32r: Rear end of tandem seat, 40: Grab bar, 41: Fixed portion, 41L: Left fixed portion, 41R: Right fixed portion, 42: Grab portion, 42C: Central bar, 42L: Left bar (left grab portion), 42R: Right bar (right grab portion), 42u: Upper edge of left bar and right bar, 43: Front support portion, 43L: Left seat receiving portion, 43R: Right seat receiving portion, 44: Rear support portion, 44A: Central seat receiving portion, 44C: Central arm, 44L: Left arm, 44R: Right arm, 44u: Upper edge of rear support portion, 45: Taillight attachment portion, 45L: Left attachment portion, 45R: Right attachment portion, 50: Storage box, 51: Storage section, 52: Plate portion, 52a: Sandwiched portion

## Claims

1. A straddled vehicle comprising:
a head pipe (11);
a left seat frame (13L) that is placed rearward and leftward of the head pipe (11) and extends rearward;
a right seat frame (13R) that is placed rearward and rightward of the head pipe (11) and extends rearward;
a cross member (15) that is connected to the left seat frame (13L) and the right seat frame (13R) and extends in a left-right direction;
a taillight (20) having a front end (20f) and a rear end (20r) that is located rearward of the left seat frame (13L) and the right seat frame (13R);
a main seat (31) on which a rider sits that is placed rearward of the head pipe (11);
a tandem seat (32) on which a tandem rider sits that is placed rearward of the main seat (31) and at least a portion of which is placed upward of the left seat frame (13L), the right seat frame (13R) and the cross member (15); and
a grab bar (40) supported by the cross member (15), wherein:
the tandem seat (32) has a rear end (32r) that is located rearward of the front end (20f) of the taillight (20); and
the grab bar (40) includes:
a fixed portion (41) fixed to the cross member (15) that is placed so as to overlap with the cross member (15) as the vehicle is seen from above;
a grab portion (42) including a left grab portion (42L) that extends rearward from the fixed portion (41) and is placed leftward of a vehicle center line (CL) and a right grab portion (42R) that extends rearward from the fixed portion (41) and is placed rightward of the vehicle center line (CL);
a front support portion (43) that is placed so as to overlap with the cross member (15) as the vehicle is seen from above and supports the tandem seat (32), **characterized by** a rear support portion (44) at least a portion of which is placed rearward of the cross member (15), the left seat frame (13L) and the right seat frame (13R) and which supports the tandem seat (32).

2. The straddled vehicle according to claim 1, **characterized in that** the rear support portion (44) extends rearward from the fixed portion (41).

3. The straddled vehicle according to claim 1 or 2, **characterized in that** the fixed portion (41) includes a left fixed portion (41L) that is placed leftward of the vehicle center line (CL) and a right fixed portion (41R) that is placed rightward of the vehicle center line (CL).

4. The straddled vehicle according to claim 3, **characterized in that** the rear support portion (44) includes a left arm (44L) extending rearward from the left fixed portion (41 L), a right arm (44R) extending rearward from right fixed portion (41R) and spaced apart rightward from the left arm (44L), and a central arm (44C) provided so as to bridge between the left arm (44L) and the right arm (44R).

5. The straddled vehicle according to claim 4, **characterized in that** the central arm (44C) of the rear support portion (44) is spaced apart forward from a portion (42C) of the grab portion (42).

6. The straddled vehicle according to claim 4 or 5, **characterized in that** the left arm (44L) of the rear support portion (44) is spaced apart rightward from the left grab portion (42L) of the grab portion (42); and
the right arm (44R) of the rear support portion (44) is spaced apart leftward from the right grab portion (42R) of the grab portion (42).

7. The straddled vehicle according to any one of claims 1 to 6, **characterized in that** the grab bar (40) includes a taillight attachment portion (45L, 45R) to which the taillight (20) is attached.

8. The straddled vehicle according to any one of claims 4 to 6, **characterized in that** the left arm (44L) and the right arm (44R) each include a taillight attachment portion (45L, 45R) to which the taillight (20) is attached.

9. The straddled vehicle according to any one of claims 1 to 8, **characterized in that** the front support portion (43) includes a left seat receiving portion (43L) that is placed leftward of the vehicle center line (CL) as the vehicle is seen from above and receives a load from the tandem seat (32), and a right seat receiving portion (43R) that is placed rightward of the vehicle center line (CL) as the vehicle is seen from above and receives a load from the tandem seat (32); and
the rear support portion (44) includes a central seat receiving portion (44A) that is placed on the vehicle center line (CL) as the vehicle is seen from above and receives a load from the tandem seat (32).

10. The straddled vehicle according to any one of claims 1 to 9, **characterized in that** the straddled vehicle comprises a storage box (50) formed from a resin material, the storage box (50) including a box-shaped storage section (51) that is placed forward of the cross member (15) and a plate portion (52) extending rearward from the storage section (51); and
the plate portion (52) of the storage box (50) includes a sandwiched portion (52a) that is sandwiched between the tandem seat (32) and the rear support portion (44) of the grab bar (40).

11. The straddled vehicle according to any one of claims 1 to 10, **characterized in that** an upper edge (42u) of the left grab portion (42L) and the right grab portion (42R) is inclined relative to an upper edge (44u) of the rear support portion (44) so as to extend upward toward the rear side as the vehicle is seen from the side.

12. The straddled vehicle according to any one of claims 1 to 11, **characterized in that** the fixed portion (41), the grab portion (42), the front support portion (43) and the rear support portion (44) of the grab bar (40) are formed from a single member formed integrally together.

## Patentansprüche

1. Ein Spreiz-Sitz-Fahrzeug, das umfasst:
ein Kopf-Rohr (11);
einen linken Sitz-Rahmen (13L), der hinter und links vom Kopf-Rohr (11) angeordnet ist und sich nach hinten erstreckt;
einen rechten Sitz-Rahmen (13R), der hinter und rechts vom Kopf-Rohr (11) angeordnet ist und sich nach hinten erstreckt;
einen Quer-Element (15), das mit dem linken Sitz-Rahmen (13L) und dem rechten Sitz-Rahmen (13R) verbunden ist und sich in einer Links-Rechts-Richtung erstreckt;
ein Rück-Licht (20), das ein Vorder-Ende (20f) und ein Rück-Ende (20r) hat, das hinter dem linken Sitz-Rahmen (13L) und dem rechten Sitz-Rahmen (13R) angeordnet ist;
einen Haupt-Sitz (31), auf dem ein Fahrer sitzt, der hinter dem Kopf-Rohr (11) platziert ist;
einen Tandem-Sitz (32), auf dem ein Tandem-Fahrer sitzt, der hinter dem Haupt-Sitz (31) angeordnet ist und von dem mindestens ein Teil oberhalb des linken Sitz-Rahmens (13L), des rechten Sitz-Rahmens (13R) und des Quer-Elements (15) angeordnet ist; und
eine Greif-Stange (40), die durch das Quer-Element (15) gelagert ist, wobei:
der Tandem-Sitz (32) ein Rück-Ende (32r) hat, das hinter dem Vorder-Ende (20f) des Rück-Lichts (20) angeordnet ist; und
die Greif-Stange (40) umfasst:
einen fixierten Abschnitt (41), der an dem Quer-Element (15) fixiert ist und so angeordnet ist, dass er das Quer-Element (15) überlappt, wenn das Fahrzeug von oben gesehen wird;
einen Greif-Abschnitt (42), der einen linken Greif-Abschnitt (42L), der sich von dem fixierten Abschnitt (41) nach hinten erstreckt und links von einer Fahrzeug-Mittellinie (CL) angeordnet ist, und einem rechten Greif-Abschnitt (42R), der sich von dem fixierten Abschnitt (41) nach hinten erstreckt und rechts von der Fahrzeug-Mittellinie (CL) angeordnet ist, beinhaltet;
einen Vorder-Stütz-Abschnitt (43), der so angeordnet ist, dass er sich mit dem Quer-Element (15) überlappt, wenn das Fahrzeug von oben gesehen wird, und der den Tandem-Sitz (32) stützt, **gekennzeichnet durch** einen Rück-Stütz-Abschnitt (44), von dem mindestens ein Abschnitt hinter dem Quer-Element (15), dem linken Sitz-Rahmen (13L) und dem rechten Sitz-Rahmen (13R) angeordnet ist und der den Tandem-Sitz (32) stützt.

2. Das Spreiz-Sitz-Fahrzeug gemäß Anspruch 1, **dadurch gekennzeichnet, dass** sich der Rück-Stütz-Abschnitt (44) vom fixierten Abschnitt (41) nach hinten erstreckt.

3. Das Spreiz-Sitz-Fahrzeug gemäß Anspruch 1 oder 2, **dadurch gekennzeichnet, dass** der fixierte Abschnitt (41) einen linken fixierten Abschnitt (41L), der links von der Fahrzeug-Mittellinie (CL) angeordnet ist, und einen rechten fixierten Abschnitt (41R), der rechts von der Fahrzeug-Mittellinie (CL) angeordnet ist, beinhaltet.

4. Das Spreiz-Sitz-Fahrzeug gemäß Anspruch 3, **dadurch gekennzeichnet, dass** der Rück-Stütz-Abschnitt (44) einen linken Arm (44L), der sich von dem linken fixierten Abschnitt (41L) nach hinten erstreckt, einen rechten Arm (44R), der sich von dem rechten fixierten Abschnitt (41R) nach hinten erstreckt und von dem linken Arm (44L) nach rechts beabstandet ist, und einen zentralen Arm (44C), der vorgesehen ist, dass er eine Brücke zwischen dem linken Arm (44L) und dem rechten Arm (44R) bildet, beinhaltet.

5. Das Spreiz-Sitz-Fahrzeug gemäß Anspruch 4, **dadurch gekennzeichnet, dass** der zentrale Arm (44C) des Rück-Stütz-Abschnitts (44) von einem Abschnitt (42C) des Greif-Abschnitts (42) nach vorne beabstandet ist.

6. Das Spreiz-Sitz-Fahrzeug gemäß Anspruch 4 oder 5, **dadurch gekennzeichnet, dass** der linke Arm (44L) des Rück-Stütz-Abschnitts (44) von dem linken Greif-Abschnitt (42L) des Greif-Abschnitts (42) nach rechts beabstandet ist; und
der rechte Arm (44R) des Rück-Stütz-Abschnitts (44) von dem rechten Greif-Abschnitt (42R) des Greif-Abschnitts (42) nach links beabstandet ist.

7. Das Spreiz-Sitz-Fahrzeug gemäß irgendeinem der Ansprüche 1 bis 6, **dadurch gekennzeichnet, dass** die Greif-Stange (40) ein Rück-Licht-Anbringungs-Abschnitt (45L, 45R) beinhaltet, an dem das Rück-Licht (20) angebracht ist.

8. Das Spreiz-Sitz-Fahrzeug gemäß irgendeinem der Ansprüche 4 bis 6, **dadurch gekennzeichnet, dass** der linke Arm (44L) und der rechte Arm (44R) jeweils ein Rück-Licht- Anbringungs-Abschnitt (45L, 45R) beinhaltet, an dem das Rück-Licht (20) angebracht ist.

9. Das Spreiz-Sitz-Fahrzeug gemäß irgendeinem der Ansprüche 1 bis 8, **dadurch gekennzeichnet, dass** der Vorder-Stütz-Abschnitt (43) einen linken Sitz-Aufnahme-Abschnitt (43L), der links von der Fahrzeug-Mittellinie (CL) angeordnet ist, wenn das Fahrzeug von oben gesehen wird, und eine Last von dem Tandem-Sitz (32) aufnimmt, und einen rechten Sitz-Aufnahme-Abschnitt (43R), der rechts von der Fahrzeug-Mittellinie (CL) angeordnet ist, wenn das Fahrzeug von oben gesehen wird, und eine Last von dem Tandem-Sitz (32) aufnimmt, beinhaltet; und
der Rück-Stütz-Abschnitt (44) einen zentralen Sitz-Aufnahme-Abschnitt (44A) beinhaltet, der auf der Fahrzeug-Mittellinie (CL) angeordnet ist, wenn das Fahrzeug von oben gesehen wird, und eine Last vom Tandem-Sitz (32) aufnimmt.

10. Das Spreiz-Sitz-Fahrzeug gemäß irgendeinem der Ansprüche 1 bis 9, **dadurch gekennzeichnet, dass** das Spreiz-Sitz-Fahrzeug einen Aufbewahrungskasten (50), der aus einem Harzmaterial gebildet ist, aufweist, der Aufbewahrungskasten (50) beinhaltet einen kastenförmigen Aufbewahrungs-Abschnitt (51), der vor dem Quer-Element (15) angeordnet ist, und einen Platten-Abschnitt (52), der sich von dem Aufbewahrungs-Abschnitt (51) nach hinten erstreckt; und
der Platten-Abschnitt (52) des Aufbewahrungskastens (50) beinhaltet Sandwich-Abschnitt (52a), der zwischen dem Tandem-Sitz (32) und dem Rück-Stütz-Abschnitt (44) der Greif-Stange (40) angeordnet ist.

11. Das Spreiz-Sitz-Fahrzeug gemäß irgendeinem der Ansprüche 1 bis 10, **dadurch gekennzeichnet, dass** eine Ober-Kante (42u) des linken Greif-Abschnitts (42L) und des rechten Greif-Abschnitts (42R) relativ zu einer Ober-Kante (44u) des Rück-Stütz-Abschnitts (44) geneigt ist, so dass sie sich nach oben zur Rück-Seite hin erstreckt, wenn das Fahrzeug von der Seite betrachtet ist.

12. Das Spreiz-Sitz-Fahrzeug gemäß irgendeinem der Ansprüche 1 bis 11, **dadurch gekennzeichnet, dass** der fixierte Abschnitt (41), der Greif-Abschnitt (42), der Vorder-Stütz-Abschnitt (43) und der Rück-Stütz-Abschnitt (44) der Greif-Stange (40) aus einem einzigen, einstückig miteinander ausgebildeten Element gebildet sind.

## Revendications

1. Véhicule à enfourcher comprenant :
un tube de tête de fourche (11) ;
un cadre de siège gauche (13L) qui est placé en arrière et à gauche du tube de tête de fourche (11) et qui s'étend vers l'arrière ;
un cadre de siège gauche (13R) qui est placé en arrière et à gauche du tube de tête de fourche (11) et qui s'étend vers l'arrière ;
un élément transversal (15) qui est connecté au cadre de siège gauche (13L) et au cadre de siège droit (13R) et qui s'étend dans une direction gauche-droite ;
un feu arrière (20) présentant une extrémité avant (20f) et une extrémité arrière (20r) qui est situé en arrière du cadre de siège gauche (13L) et du cadre de siège droit (13R) ;
un siège principal (31) sur lequel un conducteur s'assied qui est placé en arrière du tube de tête de fourche (11) ;
un siège en tandem (32) sur lequel un passager en tandem s'assied qui est placé en arrière du siège principal (31) et dont au moins une partie est placée au-dessus du cadre de siège gauche (13L), du cadre de siège droit (13R) et de l'élément transversal (15) ; et
une barre de saisie (40) soutenue par l'élément transversal (15), dans lequel :
le siège en tandem (32) présente une extrémité arrière (32r) qui est située en arrière de l'extrémité avant (20f) du feu arrière (20) ; et
la barre de saisie (40) inclut :
une partie fixe (41) fixée à l'élément transversal (15) qui est placée de sorte à chevaucher l'élément transversal (15) lorsque le véhicule est vu du dessus ;
une partie de saisie (42) incluant une partie de saisie gauche (42L) qui s'étend vers l'arrière depuis la partie fixe (41) et est placée sur la gauche d'un axe central de véhicule (CL) et une partie de saisie droite (42R) qui s'étend vers l'arrière depuis la partie fixe (41) et est placé sur la droite de l'axe central de véhicule (CL) ;
une partie de soutien avant (43) qui est placée de sorte à chevaucher l'élément transversal (15) lorsque le véhicule est vu du dessus et soutient le siège tandem (32),
**caractérisé par** une partie de soutien arrière (44) dont au moins une partie est placée en arrière de l'élément transversal (15), du cadre de siège gauche (13L) et du cadre de siège droit (13R) et qui soutient le siège tandem (32).

2. Le véhicule à enfourcher selon la revendication 1, **caractérisé en ce que** la partie de soutien arrière (44) s'étend vers l'arrière depuis la partie fixe (41).

3. Le véhicule à enfourcher selon la revendication 1 ou 2, **caractérisé en ce que** la partie fixe (41) inclut une partie fixe gauche (41L) qui est placée à gauche de l'axe central de véhicule (CL) et une partie fixe droite (41R) qui est placée à droite de l'axe central de véhicule (CL).

4. Le véhicule à enfourcher selon la revendication 3, **caractérisé en ce que** la partie de soutien arrière (44) inclut un bras gauche (44L) s'étendant vers l'arrière depuis la partie fixe gauche (41L), un bras droit (44R) s'étendant vers l'arrière depuis la partie fixe droite (41R) et espacé vers la droite depuis le bras gauche (44L), et un bras central (44C) disposé de sorte à constituer un pont entre le bras gauche (44L) et le bras droit (44R).

5. Le véhicule à enfourcher selon la revendication 4, **caractérisé en ce que** le bras central (44C) de la partie de soutien arrière (44) est espacé vers l'avant depuis une partie (42C) de la partie de saisie (42).

6. Le véhicule à enfourcher selon la revendication 4 ou 5, **caractérisé en ce que** le bras gauche (44L) de la partie de soutien arrière (44) est espacé vers la droite depuis la partie de saisie gauche (42L) de la partie de saisie (42) ; et
le bras droit (44R) de la partie de soutien arrière (44) est espacé vers la gauche de la partie de saisie droite (42R) de la partie de saisie (42).

7. Le véhicule à enfourcher selon l'une quelconque des revendications 1 à 6, **caractérisé en ce que** la barre de saisie (40) inclut une partie de fixation de feu arrière (45L - 45R) à laquelle le feu arrière (20) est rattaché.

8. Le véhicule à enfourcher selon l'une quelconque des revendications 4 à 6, **caractérisé en ce que** le bras gauche (44L) et le bras droit (44R) incluent chacun une partie de fixation de feu arrière (45L, 45R) à laquelle le feu arrière (20) est rattaché.

9. Le véhicule à enfourcher selon l'une quelconque des revendications 1 à 8, **caractérisé en ce que** la partie de soutien avant (43) inclut une partie gauche recevant un siège (43L) qui est placée à gauche de l'axe central de véhicule (CL) lorsque le véhicule est vu du dessus et reçoit une charge du siège tandem (32), et une partie droite recevant un siège (43R) qui est placée à droite de l'axe central de véhicule (CL) lorsque le véhicule est vu du dessus et reçoit une charge du siège tandem (32) ; et
la partie de soutien arrière (44) inclut une partie centrale recevant un siège (44A) qui est placée sur l'axe central de véhicule (CL) lorsque le véhicule est vu du dessus et reçoit une charge du siège tandem (32).

10. Le véhicule à enfourcher selon l'une quelconque des revendications 1 à 9, **caractérisé en ce que** le véhicule à enfourcher comprend une boîte de stockage (50) constituée à partir d'un matériau résineux, la boîte de stockage (50) incluant une section de stockage en forme de boîte (51) qui est placée à l'avant de l'élément transversal (15) et une partie de plaque (52) s'étendant vers l'arrière depuis la section de stockage (51) ; et
la partie de plaque (52) de la boîte de stockage (50) inclut une partie intercalée (52a) qui est intercalée entre le siège tandem (32) et la partie de soutien arrière (44) de la barre de saisie (40).

11. Le véhicule à enfourcher selon l'une quelconque des revendications 1 à 10, **caractérisé en ce que** une arête supérieure (42u) de la partie de saisie gauche (42L) et de la partie de saisie droite (42R) est inclinée par rapport à une arête supérieure (44u) de la partie de soutien arrière (44) de sorte à s'étendre vers le haut vers le côté arrière lorsque le véhicule est vu du côté.

12. Le véhicule à enfourcher selon l'une quelconque des revendications 1 à 11, **caractérisé en ce que** la partie fixe (41), la partie de saisie (42), la partie de soutien avant (43) et la partie de soutien arrière (44) de la barre de saisie (40) sont formées d'un unique élément d'ensemble intégralement constitué.
